(19) Europäisches Patentamt European Patent Office Office européen des brevets

(11) **EP 2 102 126 B1**

(12) **EUROPEAN PATENT SPECIFICATION**

(45) Date of publication and mention
of the grant of the patent:
**22.02.2017 Bulletin 2017/08**

(51) Int Cl.:
***C03C 17/36*** (2006.01)

(21) Application number: **07848734.5**

(22) Date of filing: **20.12.2007**

(86) International application number:
**PCT/GB2007/050774**

(87) International publication number:
**WO 2008/075107 (26.06.2008 Gazette 2008/26)**

(54) **COATED GLASS PANES AND PROCESS FOR THEIR MANUFACTURE**

BESCHICHTETE GLASPLATTEN UND HERSTELLUNGSVERFAHREN DAFÜR

PLAQUES DE VERRE À COUCHES ET LEUR PROCÉDÉ DE FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.12.2006 GB 0625513**

(43) Date of publication of application:
**23.09.2009 Bulletin 2009/39**

(73) Proprietor: **Pilkington Group Limited Lancashire L40 5UF (GB)**

(72) Inventors:
• **NICHOL, Gary Robert**
  **Warrington Cheshire WA3 4NQ (GB)**
• **ERSOY, Ayse**
  **Southport PR9 9NG (GB)**

(74) Representative: **Pettet, Nicholas Edward**
  **Pilkington Group Limited**
  **Intellectual Property**
  **Pilkington European Technical Centre**
  **Hall Lane**
  **Lathom**
  **Ormskirk, Lancashire L40 5UF (GB)**

(56) References cited:
  **EP-A- 1 382 583**        **WO-A-2006/134335**
  **US-A- 4 919 778**        **US-A- 5 376 455**
  **US-A- 6 040 939**        **US-A1- 2002 037 414**
  **US-A1- 2006 046 089**

**Description**

The invention relates to coated glass panes, and more specifically to heat treatable coated glass panes, with a high performance solar control coating and more specifically to heat treatable coated glass panes, to coated glass panes having undergone a heat treatment, and to a process for the manufacture of coated glass panes.

Heat treated glass panes which are toughened to impart safety properties and/or are bent are required for a large number of areas of application, for example for architectural or motor vehicle glazings. For thermally toughening and/or bending glass panes it is necessary to process the glass panes by a heat treatment at temperatures near or above the softening point of the glass used and then either to toughen them by rapid cooling or to bend them with the aid of bending means. The relevant temperature range is for standard float glass of the soda lime silica type typically about 580 - 690 °C, the glass panes being kept in this temperature range for several minutes before initiating the actual toughening and/or bending process.

The terms "heat treatment", "heat treated" and "heat treatable" in the following description and in the claims refer to thermal bending and/or toughening processes such as mentioned before and to other thermal processes during which a coated glass pane reaches temperatures in the range of about 580 - 690 °C for a period of several minutes, typically for up to about 10 minutes. A coated glass pane is deemed to be heat treatable if it survives a heat treatment without significant damage, typical damages caused by heat treatments being unacceptably high haze values or spots.

Difficulties can arise if glass panes are to be provided with coatings, particularly with coatings comprising at least one Ag-based functional layer, e.g. to impart low-e and/or solar control properties to reduce the energy transfer through the coated glass pane in certain spectral regions. Such coatings are not of themselves heat treatable. Ag-based functional layers are usually embedded between lower and upper anti-reflection layers and, optionally, further auxiliary layers which protect them, modify the reflection, transmission and absorption characteristics of the coating in certain spectral regions, etc.

Low-e and/or solar control coatings able to withstand heat treatments without significant damage (= heat treatable coatings) are heavily searched for. It is particularly aimed at identifying heat treatable coatings able to withstand heat treatments without a significant change of their optical properties, e.g. light transmittance and reflection colour, as reflected in low $\Delta E^*$ values.

It is more specifically desirable to provide heat treatable coatings having high performance solar control properties. High performance solar control coatings combine a solar control function, primarily aiming at reducing the total solar energy transfer through a glazing, with a heat insulating function, primarily aiming at reflecting IR radiation. Depending on the amount of light and/or solar energy absorbing layers present such high performance solar control coatings may vary functionally between coatings having essentially primarily low-e performance and coatings mainly having solar control performance.

Such high performance solar control coatings typically comprise at least one Ag-based functional layer, primarily for reflecting IR radiation at a low IR absorption level, and at least one light and/or solar energy absorbing layer, primarily functioning to reduce the solar energy transmittance by both absorption and reflection.

A typical basic layer sequence - optionally repeated once or several times - of such high performance solar control coatings is as follows (all layers being thin enough to be visibly transparent):

(glass substrate /) lower dielectric anti-reflection layer / lower barrier layer / Ag-based functional layer / upper barrier layer / upper dielectric anti-reflection layer.

The barrier layers - which usually have a thickness of no more than about 10 nm - may protect the Ag-based functional layer during the deposition of the coating and thereafter and provide an interface to the anti-reflection layers. In the case of high performance solar control coatings at least one of the barrier layers is composed of a material by which a reduced level of solar energy transmittance may be achieved. A typical material for light and/or solar energy absorbing barrier layers of high performance solar control coatings is NiCr, see e.g. EP 0 646 551 B1.

The lower and upper anti-reflection layers basically may serve one or more of the following purposes:

- influence (increase) the level of light transmittance of the coating by optical interference (anti-reflection), for which reason their optical thickness needs to be a fraction of wavelengths in the visible part of the spectrum;

- achieve specified colours in transmission and reflection, neutral or blue colours being usually preferred;

- protect the Ag-based functional layer (and the barrier layers) against diffusion of, e.g., oxygen or other detrimental gases or against chemical or mechanical modification, specifically if the coated glass panes shall be heat treated; etc.

They may be selected from a variety of known dielectric materials used for solar control and/or low-e coatings according to the specific purposes and applications of a particular coating.

EP 1 382 583 A2 discloses heat treatable coated glass panes with a low-e and/or solar control coating comprising, in sequence, a lower anti-reflection layer, a metallic primer layer ("couche de mouillage") corresponding to the lower barrier layer of the basic layer sequence hereinabove, an Ag-based functional layer, optionally a metallic barrier layer, and an outer anti-reflection layer, wherein the lower and upper anti-reflection layers each comprise partial layers having diffusion barrier properties, composed of, e.g., nitrides of the type $Si_3N_4$ or A1N. The optional metallic barrier layer may protect the Ag-based functional layer during the deposition of the outer layers of the coating and also during a subsequent heat treatment by capturing oxygen and thereby being partially or fully oxidized. According to the examples of the prior publication coated glass panes undergo only small changes of their light transmittance ($\Delta T_L$ at most about 2 %) and of their reflection colour, when heat treated at temperatures between 620 and 640 °C. It was found, however, that certain of the known coated glass panes show an unacceptably high damage level after a heat treatment.

WO 2003/020656 A1 discloses coatings having solar control and/or low-e properties, some of which being heat treatable, the coatings comprising one or two of the following layer sequences:

(substrate /) dielectric layer / optional metal based lower primer layer / IR reflective layer (e.g. Ag) / optional metallic upper primer layer / dielectric layer.

The lower primer layer may comprise transition metals such as Cu, Ti, Ni, Inconel, stainless steel, tungsten, and alloys thereof. For the upper primer layer only Ti is disclosed.

WO 2006/028729 A1 discloses heat treatable coatings comprising, in one embodiment, the following layer sequence:

(substrate /) first metal based layer / IR reflective layer (e.g. Ag) / second metal based layer / dielectric layer.

The metals used for the two metal based layers corresponding to the lower and upper barrier layers of the basic layer sequence hereinabove may according to this prior publication be chosen from among W, Cr, Ta, Mo, Al, Nb and their mixtures. The dielectric layer preferably comprises $Si_3N_4$.

US 2002/037414 A1 discloses a panel assembly with lower and upper anti-reflection layers enclosing between them a silver alloy functional layer that is on one or both sides arranged adjacent to a barrier metal layer. The barrier metal layer may comprise at least 50 at.% Cr; a nitride compound; at least one of B, C, V, W, Ta, Re, Rh, Ir, Mo, Ru; amorphous TaSiN or CrSiN. According to an example embodiment barrier metal layers arranged both below and above a silver alloy functional layer may consist of chromium nitride $CrN_x$. The anti-reflective layers may comprise silicon nitride layers.

The inventors of the instant invention found that several of the known coated glass panes did not withstand without visible damage one or the other test simulating ordinary environmental influences during storage, transport and use of the coated glass panes before and after a heat treatment and the mechanical and chemical conditions acting on the coated glass panes during usual handling and processing steps. Several of the known coated glass panes showed significant and clearly noticeable modifications of their optical properties during a heat treatment.

The invention primarily aims to provide heat treatable coated glass panes having high performance solar control properties, corresponding to a relatively low emissivity (corresponding to a low sheet resistance) and at the same time a reduced solar energy transmittance, combined with a sufficiently high light transmittance.

In a preferred embodiment the invention aims to provide heat treatable coated glass panes, the optical properties of which do not change significantly due to a heat treatment. Preferably the colour modification caused by a heat treatment should be so small that heat treated and non-heat treated coated glass panes may be glazed adjacent to each other without a noticeable colour difference.

The inventive heat treatable high performance solar control coatings should withstand ordinary environmental influences during storage, transport and use of the coated glass panes both before and after a heat treatment and survive the mechanical and chemical conditions acting on the coated glass panes during usual handling and processing steps without significant damage.

Another aim is to keep the haze value of the coated glass panes low even after a heat treatment.

The solution of one or more of the problems mentioned above is the subject of claim 1. Preferred embodiments are set out in claims 2 - 13.

A process for the manufacture of coated glass panes is set out in claims 14 and 15.

Surprisingly coated glass panes with high performance solar control coatings and more specifically heat treatable coated glass panes with high performance solar control coatings comprising an Ag-based functional layer which in certain embodiments undergo only slight modifications of their optical properties during a heat treatment can by provided by using at least one barrier layer comprising $WN_x$ (x < 1) below and/or above the Ag-based functional layer and preferably both a lower and upper barrier layer comprising $WN_x$ (x < 1).

"x" designates the atomic ratio N : W which equals 1 for a stoichiometric tungsten nitride. "$WN_x$ (x < 1)" therefore designates substoichiometric tungsten nitride wherein x is between above 0 and below 1.

While it may be possible and is within the scope of the invention to use for the barrier layers substoichiometric nitrides of W-based alloys (with a tungsten content above about 50 at.%) rather than of pure W or to use for the barrier layers mixtures of substoichiometric tungsten nitride with other compounds or with dopants / additives or to use multiple layers comprising further layers in addition to the inventive barrier layer comprising substoichiometric tungsten nitride, as long as these combinations or mixtures do not interfere with the coating properties aimed at, it is preferred to use barrier layers which consist essentially of $WN_x$ (x < 1).

Barrier layers comprising a substoichiometric tungsten nitride such as claimed have proven to provide an excellent protection to the Ag-based functional layer during the various phases of production and specifically during heat treatment and during use, to be stable during heat treatments and to provide an excellent solar control function through light and solar energy absorption and reflection. By adapting their thickness appropriately the level of light and solar energy transmittance reduction achieved by the coating may be varied widely.

It has been found that high performance solar control coatings with lower and upper barrier layers comprising stoichiometric tungsten nitride WN were not fully heat treatable.

While it is not excluded to arrange the barrier layers spaced by thin additional layers from the Ag-based functional layer, it is particularly preferred to arrange the lower barrier layer immediately below and/or the upper barrier layer immediately above the Ag-based functional layer.

To achieve a sufficient barrier and solar control function the barrier layers comprising $WN_x$ (x < 1) should have a thickness of at least about 2 nm. An upper limit of the barrier layer thickness is essentially provided by the minimum level of light transmittance aimed at. A barrier layer thickness of up to about 8 nm, in the extreme up to about 10 nm will cover most practical solar control applications.

The lower barrier layer below the Ag-based functional layer may among others function as a growth and adhesion promoting layer for the subsequently deposited Ag-based functional layer.

The upper barrier layer may among others protect the Ag-based functional layer during the subsequent deposition of the upper anti-reflection layer.

At least one of the barrier layers is chosen and preferably both of them are chosen so as to provide a solar energy absorption function to the coating which is essential to achieve the solar control function aimed at.

Layers comprising $WN_x$ (x < 1) have proven effective as growth promoting layers which assist in achieving a low sheet resistance at a given thickness of the subsequent Ag-based functional layer and as layers effectively protecting the Ag-based functional layer during further processing, e.g. during heat treatments and handling of the coated glass panes.

While it is particularly preferred to use $WN_x$ (x < 1) for all barrier layers of the coating, it is within the scope of the invention to use other materials for any of the barrier layers, provided that at least one of the lower or upper barrier layers comprises $WN_x$ (x < 1).

For barrier layers not comprising $WN_x$ (x < 1) materials known for the purpose of protecting Ag-based functional layers such as certain metals, metal suboxides, metal oxides, metal (oxi)nitrides or the like may be used. Exemplary materials comprise - without limitation - Ti, NiCr, Nb, W or alloys thereof, or suboxides like, e.g., $TiO_x$, $NiCrO_x$, $InSnO_x$. Such materials are well known in the art to be able to protect an Ag-based functional layer during the deposition of a subsequent anti-reflection layer and during a heat treatment of the coated glass pane.

If, however, the coated glass pane shall not only be heat treatable but is intended to undergo only a negligible colour and light transmittance modification during a heat treatment, barrier layers comprising essentially fully oxidized, at most slightly substoichiometric metal oxides are preferred for barrier layers not comprising $WN_x$ (x < 1).

Protection of the Ag-based functional layer during the deposition process and a high optical stability during a heat treatment can be achieved if a non-$WN_x$ (x < 1) barrier layer comprises a (doped) metal oxide sputtered from a (doped) metal oxide target, e.g. of an Al-doped oxide of Zn (ZnO:Al), specifically if sputtered from a conductive ZnO:Al target. ZnO:Al may be deposited fully oxidized or such that it is slightly suboxidic.

A non-$WN_x$ barrier layer may also comprise a Ti oxide, preferably a Ti oxide sputtered from a conductive oxide target. The Ti oxide barrier layer may be deposited as a suboxide layer.

Another optional non-$WN_x$ barrier layer is an In oxide or an oxide of an In-based alloy like In-Sn oxide (ITO), also optionally deposited a slightly substoichiometric oxide, the In or In-based alloy oxides also preferably being sputtered from oxide targets.

To provide a sufficient protection for the Ag-based functional layer a non-$WN_x$ (x < 1) barrier layer, if deposited as a metal oxide or (oxi)nitride, should have a thickness of at least about 2 nm. If metal or metal suboxide barrier layers are used even a lower thickness than about 3 nm may be sufficient, e.g. a thickness of at least about 0.5 nm and preferably of about 1 - 3 nm.

The anti-reflection layers of the inventive coating may be composed of one or several layers of dielectric materials such as those well known to a person skilled in the art, e.g. may comprise pure, mixed or doped oxides of Zn, Sn, Ti, Bi, In, Nb, Ta, Zr, Hf, Al, Si, etc., or certain oxinitrides or nitrides like $Si_3N_4$ or AlN.

If the coated glass pane is, however, intended to be heat treatable with a high stability of its optical properties the anti-reflection layers preferably comprise at least one layer of an (oxi)nitride of Al and/or Si, serving as a diffusion barriers for gases like oxygen, for glass components or components of the coating, $Si_3N_4$ (optionally containing a minor amount of Al or the like stemming from target doping) being particularly preferred, e.g. for productivity reasons.

The term "(oxi)nitride of Al and/or Si" encompasses the nitrides A1N and $Si_3N_4$, the oxinitrides $AlO_xNy$ and $SiO_xN_y$, and their mixtures. Layers of (oxi)nitride of Al and/or Si may be sputtered from Al and/or Si targets in a sputtering atmosphere containing nitrogen and argon. An oxygen content of the (oxi)nitride layers may be caused by residual oxygen in the sputtering atmosphere or by a controlled content of added oxygen in the atmosphere. It is generally preferred if the oxygen content of the (oxi)nitride is significantly lower than its nitrogen content, i.e. if the atomic ratio O/N in the layer is kept significantly below 1. Specifically preferred are anti-reflection layers of the Si-Al oxinitride type with an atomic ratio Al : Si in the order of 2 - 10 % and an atomic ratio O : N in the order of 3 - 30 %. It is, however, most preferred to use Al and/or Si nitride with a negligible oxygen content for the base layer of the anti-reflection layer. The oxygen content is regarded as negligible if the refractive index of the layer does not differ significantly from the refractive index of a pure Al and/or Si nitride layer.

Such preferred anti-reflection layers together with at least one barrier layer comprising $WN_x$ (x < 1) located above and/or below the Ag-based functional layer have been found to protect effectively the Ag-based functional layer during a heat treatment and against typical mechanical and chemical influences during handling, processing and use.

It is within the scope of the invention to use doped or mixed Al or Si targets or to otherwise add metals or semiconductors to the Al or Si component of these layers as long as their essential barrier and protection properties relied upon for heat treatable variants of the inventive coating is not lost. Such doping may, e.g., result from the use of certain technical Al or Si alloys as target materials which may contain metal or semiconductor additives such as Cu, Mg, Ti, Si or the like in amounts of up to about 10 at.% in the case of Al and B. Al or the like may be contained in amounts of up to about 10 at.% in the case of Si.

The overall thickness of both the lower and upper anti-reflection layers is chosen (as is well known in the art) such that they can serve their basic function of anti-reflecting the Ag-based functional layer and the neighbouring barrier layers by optical interference and provide the coated glass pane with a pleasing appearance or a desired colour in reflection or transmission. To achieve the desired anti-reflection property each anti-reflection layer will typically have a total thickness of about 25-50 nm.

The Ag-based functional layer will usually consist only of silver without any additive, as is normally the case in the area of low-e and/or solar control coatings. It is, however, within the scope of the invention to modify the properties of the Ag-based functional layer by adding doping agents, alloy additives or the like or even very thin metal or metal compound layers, as long as the properties of the Ag-based functional layer necessary for its function as a highly light-transmitting and low light-absorbent IR-reflective layer are not substantially impaired thereby.

The thickness of the Ag-based functional layer is dominated by its technical purpose. For typical high performance solar control purposes its preferred thickness is about 7-15 nm and specifically about 8-12 nm.

To further increase the mechanical or chemical robustness of the inventive coating an additional outermost protective layer may be provided. The material of the outermost protective layer may be chosen such that improved mechanical protection properties during handling, processing and/or a heat treatment and/or a good corrosion resistance are achieved. A thickness of about 0.5-10 nm, preferably of about 1-5 nm, will in most cases be appropriate.

An (oxi)nitride of Al and/or Si may be a very efficient diffusion barrier and protective material for the outermost protective layer, even in such a low thickness. Among suitable transparent materials for the outermost protective layer are also oxides of Al, Si, Ti and/or Zr, further materials known for their protective and barrier properties not being excluded. If a high optical stability of the coating during a heat treatment is not a key issue visible light absorbing materials such as an (oxi) nitride of Ti may also be used.

A particularly preferred layer sequence of the inventive coating comprises the following layers:

(glass pane /) lower AR layer of $Si_3N_4$ 25 - 40 nm / lower barrier layer of $WN_x$ (x < 1) 2-8 nm / functional layer of Ag 8-12 nm / upper barrier layer of $WN_x$ (x < 1) 2 - 8 nm / upper AR layer of $Si_3N_4$ 30 - 50 nm,

wherein the $Si_3N_4$ layers may contain a minor amount of an additive such as Al, wherein the composition of the $Si_3N_4$ layers may slightly differ from Si : N = 0.75, and wherein an minor amount of oxygen may be present in the $Si_3N_4$ layers.

Coated glass panes with a high performance solar control coating according to the invention - if properly designed - may be designed to achieve a light transmittance $T_L$ in the range of about 20 - 70 % and a correspondingly low solar energy transmittance. The light transmittance after a heat treatment will mostly be somewhat higher than the light transmittance before such heat treatment. Coated glass panes produced in accordance with certain embodiments of the invention, e.g. if metallic or suboxidic layers are avoided and both barrier layers are chosen to comprise $WN_x$ (x < 1), typically show an increase $\Delta T_L$ of their light transmittance during a heat treatment of at most about 3 %, preferably at most 2 % and most preferred at most 1 %.

Light transmittance values $T_L$ referred to in the description and in the claims are specified with reference to a single coated glass pane comprising a 4 mm thick standard float glass pane having a light transmittance $T_L$ of 90 % without a coating. $T_L$, $T_E$ and g (= THST) are used in accordance with their general meaning as a measure of the flux transmitted through the glazing as a percentage of the incident flux of luminous solar radiation ($T_L$) and as a ratio of the incident flux of total solar radiation (g).

Coated glass panes according to the invention preferably have a sheet resistance of at most about 12 Ω/sq., more preferred of at most about 11 Ω/sq. (before a heat treatment). Due to a heat treatment the emissivity of the inventive coatings is usually reduced by typically about 1 Ω/sq. or even 2 Ω/sq., without such reduction having a significant influence on the visual appearance of the coated glass panes. Heat treated coated glass panes preferably have a sheet resistance of at most about 10 Ω/sq., preferably at most about 9 Ω/sq. A reduction of the sheet resistance during a heat treatment reflects a reduction of the correlated sheet resistance of the coating which indicates that the Ag-based functional layer survives the heat treatment without major damage.

While a neutral or blue reflection and transmission colour of the coated glass panes is usually aimed at, the colour of the coated glass panes according to the invention may be varied widely according to the intended appearance of the product by adapting the layer sequences, thicknesses and/or materials appropriately.

Coated glass panes according to the invention may be used as such if no heat treatment is required. One major advantage of certain of the heat treatable variants of inventive coated glass panes consists in the fact that due to their thermal stability non-heat treated and heat treated coated glass panes may be used in the same building and glazed adjacent to each other without a noticeable colour difference.

The colour and light transmittance stability of certain inventive coated glass panes is reflected by the fact that heat treated coated glass pane according to certain preferred embodiments of the invention display a $\Delta E^*$ value (with reference to an identical non-heat treated coated glass pane and as defined herein below) below about 1 in reflection (glass side) and below about 2 in transmission. Specifically the colour stability of certain embodiments of the invention is extremely high, $\Delta a^*$ and $\Delta b^*$ each remaining below about $\pm 1$ in transmission which is practically non-noticeable.

The thermal stability of coated glass panes according to the invention is reflected in that the haze value of heat treated coated glass panes remains below about 0.5 %, most often even below about 0.3 %. Larger increases in the haze value, if detected during a heat treatment, would indicate that the coating is beginning to be damaged.

It goes without saying that coated glass panes will not necessarily survive without damage more than one heat treatment and that all comparison values before and after heat treatment refer to a comparison between a non-heat treated coated glass pane and a coated glass pane heat treated once. Needless to say that heat treated coated glass panes may need to survive subsequent thermal treatments at significantly lower temperatures such as those applied during heat soak tests (usually applied to artificially age and thereby destroy NiS-containing toughened glass panes) which are typically in the order of 300 °C.

To reduce the light transmittance increase during a heat treatment the upper and lower anti-reflection layers should be deposited with an essentially stoichiometric composition. If, e.g., the optical stability is not of particular concern, a certain degree of sub- or super-stoichiometry may be acceptable for one or more of the layers of the inventive coating. It is particularly within the scope of the invention to use $SiN_y$ anti-reflection layers having y < 0.75 or y > 0.75, such as known in the art.

To further optimize the optical properties of the coating the upper and/or lower anti-reflection layers may comprise layers consisting of suitable materials generally known for dielectric layers of low-e and/or solar control coatings, in particular chosen from one or more of the oxides of Sn, Ti, Zn, Nb, Ce, Hf, Ta, Zr, Al and/or Si and/or of (oxi)nitrides of Si and/or Al. It will be appreciated that these layers may contain additives which modify their properties and/or facilitate their manufacture, e.g. doping agents or reaction products of reactive sputtering gases. In the case of oxide layers nitrogen may be added to the sputtering atmosphere which may lead to the formation of oxinitrides rather than oxides.

In particular cases, specifically if a particularly low solar energy transmittance is aimed at, it may be desirable for one or both of the anti-reflection layers to comprise at least one further, preferably thermally stable light and/or solar energy absorbing layer.

Care must be taken by performing a proper material, structure and thickness selection, when adding any layer to the basic layer sequence of the inventive coatings, that the properties primarily aimed at, e.g. a high thermal stability, are not significantly impaired.

While the invention is primarily directed to high performance solar control coatings with only one Ag-based functional layer it is within the scope of the invention to use two or more sequences of layers comprising a lower anti-reflection layer, a lower barrier layer, an Ag-based functional layer, an upper barrier layer and an upper anti-reflection layer, the upper anti-reflection layer of one series of layers and the lower anti-reflection layer of a subsequent series possibly being combined to function as a Fabry-Perot separation layer between subsequent Ag-based functional layers. By providing more than one sequence of layers the optical properties of the high performance solar control coating may be further optimized for the respective application as is well known in the art. In such case of more than one Ag-based functional layer a layer of an (oxi)nitride of Al and/or Si is preferably at least provided both near the glass pane and as part of the outermost anti-reflection layer, preferably also as part of the anti-reflecting spacer layer between two Ag-based functional layers. Below and above each Ag-based functional layer lower and upper barrier layers are provided, at least one of which and preferably all of them being chosen to comprise $WN_x$ ($x < 1$).

A preferred coating according to the invention does not comprise any oxide or suboxide layer.

The invention is not limited to a specific production process for the coating. However, it is particularly preferred if at least one of the layers and most preferred all layers are applied by magnetron cathode sputtering, either in the DC mode, in the medium frequency mode or in any other suitable mode, whereby metallic or semiconducting targets are sputtered reactively or non-reactively in a suitable sputtering atmosphere. Depending on the materials to be sputtered planar or rotating targets may be used.

If an optically stable coating is aimed at the coating process should preferably be carried out by setting up suitable coating conditions such that any oxygen deficit of any oxidic layer of the coating is kept low to achieve a high stability of the light transmittance and colour of the coated glass panes during a heat treatment.

The process parameters for the manufacture of inventive heat treatable coated glass panes and the thicknesses and materials of the individual layers are chosen such that - at least in those embodiments featuring a particularly high optical stability - during a subsequent heat treatment the surface resistance of the coating decreases and the light transmittance $T_L$ of the coated glass pane does not change by more than about 3 % (in absolute figures). In any case the deposition shall be performed such that the haze value of the coated glass pane does not exceed about 0.5 %, preferably remains below about 0.3 %, even after a heat treatment.

A particularly preferred process for the manufacture of coated glass panes according to the invention is characterized in that at least one of the $WN_x$ ($x < 1$) barrier layers is sputtered from a W target in a sputter atmosphere to which a sputter gas mixture containing an inert gas and nitrogen with a volume ratio of inert gas / $N_2 > 1$ is added, the inert gas comprising preferably Ar. Best results have been achieved by a process wherein a gas mixture containing Ar and $N_2$ with a volume ratio Ar / $N_2 \geq 2$, preferably Ar / $N_2 \geq 3$, was added to the sputter atmosphere.

High performance solar control coated glass panes according to the invention may be used, e.g., as part of multiple glazings with at least one gas-filled interspace or as part of laminated glazings, and they may be used for technical, architectural, automotive or other applications. Solar control glazings comprising an inventive coated glass pane are preferably installed such that the high performance solar control coating is arranged on the second surface counted from the outside of the glazing. Only surfaces facing the atmosphere or a gas-filled interspace of the glazing are counted in this respect.

Glass panes used as substrates for high performance solar control coatings according to the invention usually consist of soda lime silica glass produced by the float glass process and may be clear or tinted. Other glass compositions are generally not excluded. The thickness of the glass panes depends upon their intended application and is usually, but without limitation, between about 2 and 12 mm.

The invention is further explained in the following with the aid of an example.

Example

A 4 mm thick clear float glass pane having a light transmittance $T_L$ of about 90 % before being coated was placed in a laboratory sputtering device in which an Al-doped Si target pair containing about 10 wt.% Al and 90 wt.% Si, an Ag target and a W (tungsten) target were arranged, and the sputtering chamber was evacuated.

In a first coating step a lower anti-reflection layer was deposited onto the glass pane. For this purpose a sputtering gas mixture comprising Ar and $N_2$ in a volume ratio of 1 : 1 (150 sccm each) was introduced into the sputtering chamber. The 80 cm long Al-doped Si target pair was activated by applying a sputtering power of 6 kW using an AC power supply. The glass pane was moved past the Al-doped Si target pair until an Al-doped Si (oxi)nitride lower anti-reflection layer with a thickness of about 32 nm was deposited. The lower anti-reflection layer contained mainly nitrogen and therefore consisted essentially of $Si_3N_4$ (and the Al dopant), but may also have contained a low amount of oxygen stemming from residual oxygen in the sputtering atmosphere.

In a second coating step a visible light and solar energy absorbing lower barrier layer was deposited onto the lower anti-reflection layer. For this purpose a sputtering gas comprising Ar and $N_2$ in a volume ratio of 3 : 1 (Ar 150 sccm, $N_2$ 50 sccm) was introduced into the sputtering chamber. The 70 cm long W target was activated by applying a sputtering power of 4 kW using a DC power supply. The glass pane was moved past the W target until a $WN_x$ ($x < 1$) lower barrier layer with a thickness of about 2.2 nm was deposited.

In a third coating step an Ag layer was deposited as IR-reflecting functional layer onto the lower barrier layer. For this purpose Ar was introduced at a rate of 150 sccm as sputtering gas into the sputtering chamber. The 70 com long Ag target was activated by applying a sputtering power of 1.3 kW using a DC power supply. The glass pane was moved past the Ag target until an Ag IR-reflecting functional layer with a thickness of about 8.6 nm was deposited.

In a fourth coating step a visible light and solar energy absorbing upper barrier layer was deposited onto the Ag functional layer. For this purpose a sputtering gas comprising Ar and $N_2$ in a volume ratio of 3 : 1 (Ar 150 sccm, $N_2$ 50 sccm) was introduced into the sputtering chamber. The 70 cm long W target was activated by applying a sputtering power of 4 kW using a DC power supply. The glass pane was moved past the W target until a $WN_x$ (x < 1) upper barrier layer with a thickness of about 2.2 nm was deposited.

In a final coating step an upper anti-reflection layer was deposited onto the upper barrier layer. For this purpose a sputtering gas mixture comprising Ar and $N_2$ in a volume ratio of 1 : 1 (Ar 150 sccm, $N_2$ 150 sccm) was introduced into the sputtering chamber. The 80 cm long Al-doped Si target pair was activated by applying a sputtering power of 6 kW using an AC power supply. The glass pane was moved past the Al-doped Si target pair until an Al-doped Si (oxi)nitride upper anti-reflection layer with a thickness of about 38 nm was deposited. The layer contained mainly nitrogen and therefore consisted essentially of $Si_3N_4$ (and the Al dopant), but may also have contained a low amount of oxygen stemming from residual oxygen in the sputtering atmosphere.

The nitrogen content of the two $WN_x$ layers was experimentally determined by applying SNMS (Sputtered Neutral Mass Spectroscopy) to a reference layer sputtered under conditions as described above and having a thickness of about 100 nm. A ratio W : N of about 2.5 : 1 corresponding to x = 0.4 was found.

The coated glass pane was thereafter heat treated for 5 minutes at 650 °C.

The main optical properties (visible appearance) of the coated glass pane according to the Example are listed in Table 1. The first line contains the optical values immediately after the deposition of the coating. The second line contains the optical values after the heat treatment of the coated glass pane. All values in the table are for a single coated glass pane.

The values for the visible light transmittance $T_L$ and reflectance $R_L$ were measured and calculated according to EN 410, e.g. by using a Perkin Elmer Lambda 900 Spectrophotometer.

The colour characteristics were measured and reported using the well established CIE LAB $L_i^*$, $a_i^*$, $b_i^*$ coordinates. Colour changes are represented by $\Delta E^* = ((\Delta a^*)^2 + (\Delta b^*)^2 + (\Delta L^*)^2)^{1/2}$, wherein $\Delta L^*$, $\Delta a^*$ and $\Delta b^*$ are the differences of the colour values L*, a*, b* of the coated glass pane each before and after a heat treatment. $\Delta E^*$ values of less than 3 represent a low and practically non-noticeable colour modification caused by the heat treatment.

**Table 1**

| | $T_L$ [%] | $R_L$ [%] glass side | $R_L$ [%] film side | Transmission properties (D65 at 10°) | | | Glass Side Reflection properties (D65 at 10°) | | | Film Side Reflection properties (D65 at 10°) | | |
|---|---|---|---|---|---|---|---|---|---|---|---|---|
| | | | | $L_T^*$ | $a_T^*$ | $b_T^*$ | $L_G^*$ | $a_G^*$ | $b_G^*$ | $L_F^*$ | $a_F^*$ | $b_F^*$ |
| As deposited | 64 | 11.6 | 3 | 84 | -2.4 | -0.6 | 40.9 | -4 | -6.4 | 20 | 5.2 | -6.6 |
| Heat treated | 65 | 11.3 | 2.7 | 84.5 | -2.2 | -0.8 | 40.4 | -4 | -7.1 | 19.1 | 4.4 | -7.6 |

For a double glazing consisting of two 4 mm thick glass panes, enclosing a 16 mm wide gas-filled (90 % Ar, 10 % air) interspace, one of which being a glass pane coated according to the Example, a solar energy transmittance $T_E$ of 57 % and a g value of 46 % were measured according to EN 410.

The colour variation values which were caused by the heat treatment were calculated from the tabled colour values to:

$\Delta E_T^* = 1.57$      (Transmission)

$\Delta E_G^* = 0.86$      (Glass side reflection)

$\Delta E_F^* = 0.57$      (Coated side reflection).

All these values are well below 2 indicating only a very minor change in the appearance of the coated glass pane both in transmission and in reflection.

The haze value in transmission was 0.12 ($\pm$ 0.03) before and 0.2 ($\pm$ 0.05) after the heat treatment which is well below the upper limit of about 0.5 (all values in %) which is usually applied to define heat treatable coatings. A haze value designates the percentage of transmitted light which in passing through the coated glass pane deviates from the incident beam direction by forward scattering (measured in accordance with ASTM D 1003-61). A haze value which remains low during a heat treatment is a good indicator for heat treatability.

It can be seen from Table 1 that with a high performance solar control coating according to the Example a light transmittance $T_L$ of the order of 60 % was achieved, the transmission colour being very neutral. The glass side reflected colour, which is the relevant colour in most solar control glazing applications, is bluish whereas the less important coated glass side colour is slightly reddish. These values change only very slightly during the heat treatment. The coated glass pane of the Example not only proved to be heat treatable but also survived a number of tests simulating ordinary environmental influences during storage, transport and use of the coated glass panes both before and after a heat treatment.

The invention is not restricted to the layer sequence of the Example.

The thickness of the individual layers of the coating according to the Example may be easily adapted to achieve a different solar control performance of the coated glass pane. Further exemplary high performance solar control coated glass panes were produced in the laboratory, which by simply adapting the layer thicknesses, mainly by modifying the thicknesses of the barrier layers of the Example, achieved light transmittance values $T_L$ between 33 and 57 % and total solar energy transmittance (THST) values between 29 and 46 % (standard double glazing), with Ag layers having a thickness of 8 - 9 nm, lower and upper $WN_x$ (x < 1) barrier layers having a thickness varying between about 2-6 nm each, lower anti-reflection layers of Al-doped $Si_3N_4$ having a thickness of about 29 - 32 nm and upper anti-reflection layers of Al-doped $Si_3N_4$ having a thickness of about 37 - 39 nm.

It is within the scope of the invention to add further layers to the basic layer sequence used in the Example such as described herein before, as long as they don't inhibit achievement of the intended purposes of the coatings, e.g. their heat treatability.

It is furthermore within the scope of the invention to modify the materials used for the individual layers by doping with or adding metals or the like as long as the primary task of providing heat treatable coatings is not impaired thereby.

It will be appreciated that any thickness values given for the layers of the coating are not to be understood as exact values but due to the thinness of the layers to be presented with an uncertainty of typically about 10 %, not less than about 0.5 nm.

More complex coatings using more than one Ag-based functional layer may be easily derived from the principal teaching disclosed hereinabove.

**Claims**

1. Coated glass pane with a high performance solar control coating comprising - in sequence from the glass surface - at least the following visibly transparent layers:

   - a lower anti-reflection layer,
   - a lower barrier layer,
   - an Ag-based functional layer,
   - an upper barrier layer,
   - an upper anti-reflection layer,
   - wherein at least one of the anti-reflection layers comprises an (oxi)nitride of Al and/or Si.

   **characterized in that**

   - at least one of the lower and upper barrier layers comprises $WN_x$ (x < 1), the nitrogen content x in the barrier layer(s) being $x \geq 0.1$.

2. Coated glass pane according to claim 1, **characterized in that** both barrier layers comprise $WN_x$ (x < 1).

3. Coated glass pane according to claim 1 or 2, **characterized in that** at least one and preferably both of the barrier layers consist(s) essentially of $WN_x$ (x < 1).

4. Coated glass pane according to one of the foregoing claims, **characterized in that** the nitrogen content x in the barrier layer(s) comprising $WN_x$ (x < 1) is $x \leq 0.9$, preferably $x \leq 0.5$.

5. Coated glass pane according to one of the foregoing claims, **characterized in that** the thickness of the lower and/or upper barrier layer(s) comprising $WN_x$ (x < 1) is between 2 and 10 nm, preferably between 2 and 8 nm.

6. Coated glass pane according to claim 5, **characterized in that** at least one of the anti-reflection layers comprises an (oxi)nitride of Si.

7. Coated glass pane according to any of the foregoing claims, **characterized in that** a lower or upper barrier layer not comprising $WN_x$ (x < 1) comprises a metal oxide, preferably a metal oxide sputtered from an oxidic target.

8. Coated glass pane according to claim 7, **characterized in that** said barrier layer not comprising $WN_x$ (x < 1) comprises one or more of: a metal-doped oxide of Zn, preferably an Al-doped oxide of Zn; an oxide of Ti; an oxide of In or of an In-based alloy, preferably of Sn-doped In oxide (ITO).

9. Coated glass pane according to any of the foregoing claims, **characterized in that** a lower or upper barrier layer not comprising $WN_x$ (x < 1) comprises a metal or a metal suboxide, preferably comprises Ti, NiCr, Nb, W or alloys thereof, or one or more of the suboxides $TiO_x$, $NiCrO_x$, $InSnO_x$.

10. Coated glass pane according to claim 9, **characterized in that** the barrier layer comprising a metal or a metal suboxide has a thickness of at least 0.5 nm, preferably between 1 and 3 nm.

11. Coated glass pane according to any of claims 1 to 4, **characterized in that** the coating comprises in sequence the following layers:

$$\text{(glass pane /) lower AR layer of Si}_3\text{N}_4\ 25-40\text{ nm / lower barrier layer of WN}_x\ (x<1)\ 2-8\text{ nm / functional layer of Ag }8-12\text{ nm / upper barrier layer of WN}_x\ 2-8\text{ nm / upper AR layer of Si}_3\text{N}_4\ 30-50\text{ nm.}$$

12. Coated glass pane according to any of the foregoing claims, **characterized in that** the coated glass pane has a light transmittance $T_L$ of 20 - 70 %.

13. Coated glass pane according to any of claims 1 to 6 or 12, **characterized in that** it does not comprise any oxide or suboxide layer.

14. Process for the manufacture of a coated glass pane according to any of the preceding claims, **characterized in that**
at least one of the lower and/or upper barrier layers comprising $WN_x$ (x < 1) is sputtered from a W target in a sputter atmosphere to which a sputter gas mixture containing an inert gas and nitrogen with a volume ratio of inert gas : $N_2$ > 1 is added.

15. Process according to claim 14, **characterized in that** a gas mixture containing Ar and $N_2$ with a volume ratio Ar : $N_2 \geq 2$, preferably Ar : $N_2 \geq 3$, is added to the sputter atmosphere.

**Patentansprüche**

1. Beschichtete Glasscheibe mit einer Hochleistungssonnenschutzbeschichtung, die - der Reihe nach beginnend bei der Glasoberfläche - mindestens die folgenden sichtbar transparenten Schichten umfasst:

  - eine untere Antireflexionsschicht,
  - eine untere Barriereschicht,
  - eine Funktionsschicht auf Ag-Basis,
  - eine obere Barriereschicht,
  - eine obere Antireflexionsschicht,
  - wobei mindestens eine der Antireflexionsschichten ein (Oxi)nitrid von Al und/oder Si umfasst,

  **dadurch gekennzeichnet, dass**

  - mindestens eine von der unteren Barriereschicht und der oberen Barriereschicht $WN_x$ (x < 1) umfasst, wobei der Stickstoffgehalt x in der Barriereschicht oder den Barriereschichten x $\geq$ 0,1 ist

2. Beschichtete Glasscheibe nach Anspruch 1, **dadurch gekennzeichnet, dass** beide Barriereschichten $WN_x$ ($x < 1$) umfassen.

3. Beschichtete Glasscheibe nach Anspruch 1 oder 2, **dadurch gekennzeichnet, dass** mindestens eine Barriereschicht und vorzugsweise beide Barriereschichten im Wesentlichen aus $WN_x$ ($x < 1$) besteht/bestehen.

4. Beschichtete Glasscheibe nach einem der vorhergehenden Ansprüche, **dadurch gekennzeichnet, dass** der Stickstoffgehalt x in der Barriereschicht oder den Barriereschichten umfassend $WN_x$ ($x < 1$) $x \leq 0,9$, vorzugsweise $x \leq 0,5$ ist.

5. Beschichtete Glasscheibe nach einem der vorhergehenden Ansprüche, **dadurch gekennzeichnet, dass** die Dicke der unteren Barriereschicht und/oder der oberen Barriereschicht umfassend $WN_x$ ($x < 1$) im Bereich von 2 bis 10 nm, vorzugsweise im Bereich von 2 bis 8 nm, liegt.

6. Beschichtete Glasscheibe nach Anspruch 5, **dadurch gekennzeichnet, dass** mindestens eine der Antireflexionsschichten ein (Oxi)nitrid von Si umfasst.

7. Beschichtete Glasscheibe nach einem der vorhergehenden Ansprüche, **dadurch gekennzeichnet, dass** eine untere oder obere Barriereschicht, die kein $WN_x$ ($x < 1$) umfasst, ein Metalloxid umfasst, vorzugsweise ein Metalloxid, das von einem oxidischen Target gesputtert wurde.

8. Beschichtete Glasscheibe nach Anspruch 7, **dadurch gekennzeichnet, dass** die Barriereschicht, die kein $WN_x$ ($x < 1$) umfasst, ein oder mehrere von einem metalldotierten Oxid von Zn, vorzugsweise einem Al-dotierten Oxid von Zn; einem Oxid von Ti; einem Oxid von In oder einer Legierung auf In-Basis, vorzugsweise einem Sn-dotierten In-Oxid (ITO), umfasst.

9. Beschichtete Glasscheibe nach einem der vorhergehenden Ansprüche, **dadurch gekennzeichnet, dass** eine untere oder obere Barriereschicht, die kein $WN_x$ ($x < 1$) umfasst, ein Metall oder ein Metallsuboxid umfasst, vorzugsweise Ti, NiCr, Nb, W oder Legierungen davon, oder ein oder mehrere der Suboxide $TiO_x$, $NiCrO_x$, $InSnO_x$, umfasst.

10. Beschichtete Glasscheibe nach Anspruch 9, **dadurch gekennzeichnet, dass** die Barriereschicht, die ein Metall oder ein Metallsuboxid umfasst, eine Dicke von mindestens 0,5 nm, vorzugsweise im Bereich von 1 bis 3 nm, aufweist.

11. Beschichtete Glasscheibe nach einem der Ansprüche 1 bis 4, **dadurch gekennzeichnet, dass** die Beschichtung der Reihe nach die folgenden Schichten umfasst:

(Glasscheibe/) untere AR-Schicht von $Si_3N_4$ 25 – 40 nm / untere Barriereschicht von $WN_x$ ($x < 1$) 2 – 8 nm / Funktionsschicht von Ag 8 – 12 nm / obere Barriereschicht von $WN_x$ 2 – 8 nm / obere AR-Schicht von $Si_3N_4$ 30 – 50 nm.

12. Beschichtete Glasscheibe nach einem der vorhergehenden Ansprüche, **dadurch gekennzeichnet, dass** die beschichte Glasscheibe eine Lichtdurchlässigkeit $T_L$ von 20 - 70 % aufweist.

13. Beschichtete Glasscheibe nach einem der Ansprüche 1 bis 6 oder 12, **dadurch gekennzeichnet, dass** sie keine Oxid- oder Suboxidschicht umfasst.

14. Verfahren zum Herstellen einer beschichteten Glasscheibe nach einem der vorhergehenden Ansprüche, **dadurch gekennzeichnet, dass** mindestens eine von der unteren Barriereschicht und/oder der oberen Barriereschicht umfassend $WN_x$ ($x < 1$) von einem W-Target in einer Sputteratmosphäre gesputtert wird, zu der ein Sputtergasgemisch gegeben wird, das ein Inertgas und Stickstoff in einem Volumenverhältnis von Inertgas : $N_2 > 1$ enthält.

15. Verfahren nach Anspruch 14, **dadurch gekennzeichnet, dass** ein Gasgemisch, das Ar und $N_2$ in einem Volumenverhältnis Ar : $N_2 \geq 2$, vorzugsweise Ar : $N_2 \geq 3$, enthält zu der Sputteratmosphäre gegeben wird.

**Revendications**

1. Plaque de verre à couches comportant un revêtement de protection solaire haute performance comprenant - successivement à partir de la surface du verre - au moins les couches visiblement transparentes suivantes :

   - une couche antireflet inférieure,
   - une couche-barrière inférieure,
   - une couche fonctionnelle à base d'Ag,
   - une couche-barrière supérieure,
   - une couche antireflet supérieure,
   - dans laquelle au moins l'une des couches antireflet comprend un (oxy)nitrure d'Al et/ou de Si.

   **caractérisée en ce que**

   - au moins l'une des couches-barrières inférieure et supérieure comprend du $WN_x$ ($x < 1$), la teneur en azote x de la (des) couche(s)-barrière(s) étant $x \geq 0,1$.

2. Plaque de verre à couches selon la revendication 1, **caractérisée en ce que** les deux couches-barrières comprennent du $WN_x$ ($x < 1$).

3. Plaque de verre à couches selon la revendication 1 ou 2, **caractérisée en ce qu'**au moins une et de préférence les deux couches-barrières est (sont) essentiellement constituée(s) de $WN_x$ ($x < 1$).

4. Plaque de verre à couches selon l'une quelconque des revendications précédentes, **caractérisée en ce que** la teneur en azote x de la (des) couche(s)-barrière(s) comprenant du $WN_x$ ($x < 1$) est $x \leq 0,9$, de préférence $x \leq 0,5$.

5. Plaque de verre à couches selon l'une quelconque des revendications précédentes, **caractérisée en ce que** l'épaisseur de la (des) couche(s)-barrière(s) inférieure et/ou supérieure comprenant du $WN_x$ ($x < 1$) se situe entre 2 et 10 nm, de préférence entre 2 et 8 nm.

6. Plaque de verre à couches selon la revendication 5, **caractérisée en ce qu'**au moins l'une des couches antireflet comprend un (oxy)nitrure de Si.

7. Plaque de verre à couches selon l'une quelconque des revendications précédentes, **caractérisée en ce qu'**une couche-barrière inférieure ou supérieure ne comprenant pas de $WN_x$ ($x < 1$) comprend un oxyde de métal, de préférence un oxyde de métal projeté à partir d'une cible oxydique.

8. Plaque de verre à couches selon la revendication 7, **caractérisée en ce que** ladite couche-barrière ne comprenant pas de $WN_x$ ($x < 1$) comprend un ou plusieurs de : un oxyde de Zn dopé par un métal, de préférence un oxyde de Zn dopé par de l'Al; un oxyde de Ti ; un oxyde d'In ou d'un alliage à base d'In, de préférence d'oxyde d'In dopé par du Sn (ITO).

9. Plaque de verre à couches selon l'une quelconque des revendications précédentes, **caractérisée en ce qu'**une couche-barrière inférieure ou supérieure ne comprenant pas de $WN_x$ ($x < 1$) comprend un métal ou un suboxyde de métal, comprend de préférence du Ti, du NiCr, du Nb, du W ou des alliages de ceux-ci, ou un ou plusieurs des suboxydes $TiO_x$, $NiCrO_x$, $InSnO_x$.

10. Plaque de verre à couches selon la revendication 9, **caractérisée en ce que** la couche-barrière comprenant un métal ou un suboxyde de métal a une épaisseur d'au moins 0,5 nm, de préférence entre 1 et 3 nm.

11. Plaque de verre à couches selon l'une quelconque des revendications 1 à 4, **caractérisée en ce que** le revêtement comprend successivement les couches suivantes :

(plaque de verre /) couche AR inférieure de $Si_3N_4$ 25 - 40 nm / couche-barrière inférieure de $WN_x$ (x < 1) 2 - 8 nm / couche fonctionnelle d'Ag 8 - 12 nm / couche-barrière supérieure de $WN_x$ 2 - 8 nm / couche AR supérieure de $Si_3N_4$ 30 - 50 nm.

12. Plaque de verre à couches selon l'une quelconque des revendications précédentes, **caractérisée en ce que** la plaque de verre à couches a une transmittance de la lumière $T_L$ de 20 à 70 %.

13. Plaque de verre à couches selon l'une quelconque des revendications 1 à 6 ou 12, **caractérisée en ce qu'**elle ne comprend pas de couche d'oxyde ou de suboxyde.

14. Procédé de fabrication d'une plaque de verre à couches selon l'une quelconque des revendications précédentes, **caractérisée en ce que**
au moins l'une des couches-barrières inférieure et/ou supérieure comprenant du $WN_x$ (x < 1) est projetée à partir d'une cible de W dans une atmosphère de projection à laquelle un mélange de gaz de projection contenant un gaz inerte et de l'azote à un rapport volumique du gaz inerte/$N_2$ > 1 est ajouté.

15. Procédé selon la revendication 14, **caractérisé en ce qu'**un mélange de gaz contenant de l'Ar et du $N_2$ à un rapport volumique Ar/$N_2 \geq 2$, de préférence Ar/$N_2 \geq 3$, est ajouté à l'atmosphère de projection.

**EP 2 102 126 B1**

**Patent documents cited in the description**

- EP 0646551 B1
- EP 1382583 A2
- WO 2003020656 A1
- WO 2006028729 A1
- US 2002037414 A1